# EUROPEAN PATENT APPLICATION

(11) **EP 2 055 684 A1**
(43) Date of publication of application: **06.05.2009**
(21) Application number: 06764387.4
(22) Date of filing: 27.06.2006
(51) Int. Cl.: C04B 18/02, C04B 22/14, C04B 40/00

(54) **METHOD OF OBTAINING AN ADDITIVE FOR CEMENT AND ADDITIVE THUS ACHIEVED**

(71) Applicant: Aditivos Del Cemento, S.L., 21001 Huelva (ES); Fertinagro Nutrientes, S.L., 44195 Teruel (ES); Tioxide Europe, S.L., 21810 Palos de la Frontera (ES)
(72) Inventor: PEREZ MOHEDANO, Salvador, E-21001 Huelva (ES); ATARES REAL, Sergio, E-44195 Teruel (ES); MARIJUAN DE SANTIAGO, Luis, E-21810 Palos de la Frontera (ES)
(74) Representative: Esteban Perez-Serrano, Maria Isabel
(86) International application number: PCT/ES2006/070089
(87) International publication number: WO 2008/000855

(57) **Abstract**

Method for producing a cement additive and to the additive thus obtained where the additive produced by the process of the invention is a reducing agent indicated preferably for reduction of the Cr (VI) content in cement on the basis of iron sulphate heptahydrate.

## Description

### OBJECT OF THE INVENTION

The present invention refers to a method for producing a cement additive and to the additive thus obtained.

The additive produced by the process of the invention is a reducing agent indicated preferably for reduction of the Cr (VI) content in cement on the basis of iron sulphate heptahydrate.

### BACKGROUND OF THE INVENTION

In 1950 Jaeger and Pelloni, two Swiss dermatologists, discovered the causes of a common disease in the construction industry.

The chromium contained in cement was pinpointed as the cause of an allergic eczema on the skin of workers.

The substances containing hexavalent chromium are classified in Community legislation as carcinogenic, mutagenic and irritant substances. The hexavalent chromium in cement heightens sensibilization and causes severe allergic reactions which are often suffered by workers who handle it regularly, either at the works or in the building trade.

European Parliament and Council Directive 2003/53/EC required the governments of the Member States, as of 17 January 2005, to ban the use and marketing of all those cements and preparations containing cement whose content in soluble chromium (VI), after being hydrated, was above 2 ppm of the dry weight of the cement.

Depending on the raw material used, the chromium content in cements lies between 20 ppm and 100 ppm. Upon being mixed with water, the chromium contained in the cement may be dissolved as chromium (VI), which causes the skin irritation mentioned above. Current European regulations require chromium (VI) to be reduced chemically (to a maximum of 2 ppm) and to be converted into chromium (III), thus drastically reducing solubility and, therefore, its effects on the skin.

Document W09633133 describes a method for treating ferrous sulphate for the preparation of ferrous sulphate hydrate for its use in reducing chromium in cement.

Document WO2005009917 describes a reducing agent with iron sulphate (II) content, used in reducing the soluble chromate content in cement.

The use of ferrous sulphate heptahydrate as a reducing agent is therefore already known. Its physical appearance is very much like a moist salt similar to snow. This makes correct batching of the product in the cement extremely hard, as the recommended proportions are 1 Kg of product per tonne of cement, for reducing the level of chromium VI by 3 ppm.

Difficulties are encountered in the handling and storage of this product due to the appearance of leachates, and in the batching of the product. Different drying and neutralizing methods have been used to overcome this problem, but all these processes are costly and a fine product in the region of 300 microns is obtained, which may be to prone to oxidizing by the air and to caking phenomena due to its high surface contact area between solids and the air.

### DESCRIPTION OF THE INVENTION

The problem that is solved with the present invention is that of producing an agent for reducing the chromium in cement pelletized in cylindrical form, so that batching may be precise.

Through its pelletized form we save the appearance of leachates in transport. Furthermore, it retains its acid properties longer than non-compacted reducing agents, because the process of enhancing the physical properties does not involve neutralizing or drying the ferrous sulphate heptahydrate.

The conversion of the ferrous sulphate heptahydrate into pellet form facilitates its storage through reducing the product's oxidizing and leaching surface area. In addition, an additive may be introduced into its composition that will permit the stability of this compound.

Accordingly, by obtaining a pelletized reduction additive with the method of the invention we eradicate the problems of dust particle emissions to the environment and there will therefore be fewer environmental and safety problems for people.

With the pelletized reduction additive of the invention there are fewer possibilities of caking, oxidation and spontaneous efflorescence. The flow characteristics of solids are improved substantially. The density of the product is doubled and the storage space required is therefore reduced.

Iron sulphate (II) largely comes from the process of manufacturing titanium dioxide by the sulphate process, where it appears as a by-product.

Iron sulphate (II) may be produced by crystallization of the sulphate solution, which contains titanium and iron and which is obtained by means of disintegration of the minerals with titanium or iron content or of synthetic raw materials (black solution). Here, however, a part but not all the iron is removed from the solution. Crystallization of iron sulphate (II) takes place by means of cooling the hot solution, e.g. by means of vacuum refrigeration and, when required, additional evaporation.

The iron sulphate produced by this process is an iron sulphate heptahydrate with a free moisture content of between 4-7%.

In one aspect of the invention a process is described for producing a reducing agent based on iron sulphate (II) heptahydrate.

The first step in this method propitiates the plastic deformation of the solids; for this purpose, ferrous sulphate heptahydrate is heated to a temperature of between 50-65°C, in the presence of two additives, one of which supplies a hydratable salt, such as magnesium, and a second binding and bonding additive, such as a double magnesium calcium sulphate, which is produced by making iron sulphate monohydrate with sulphuric acid content react with dolomite.

Magnesium calcium sulphate is prone to taking up the hydration water and thereby hardening the product. It is preferable for the sulphuric acid to be in excess in order to maintain acidity.

Other additives with binding and bonding functions that may be added are high lignite content clay, calcium sulphates and, in general, any compound that has binding and bonding properties. The purpose is that of providing a solids matrix so that the plastic phase does not lose too much consistency.

After the heating stage the temperature is lowered to below 30°C.

Lastly, the product is pelletized.

On increasing the temperature above 56 °C, the transition takes place between ferrous sulphate heptahydrate and ferrous sulphate tetrahydrate, so 3 molecules of water are set in play in order to create the liquid phase necessary for increasing the plastic deformation capacity of the solids; in this way, extrusion through the matrix becomes simpler and the critical formation pressure of the compactate is reduced considerably.

The creation of permanent bonds in order to achieve a stable compactate takes place due to the hydration of the salts present in the formulation, upon lowering the temperature from 56 to 30°C, the stable phase becomes heptahydrate again, the presence in the formulation of magnesium and calcium sulphate also propitiates the rate of hydration, resulting in a highly solid and stable compactate, without the presence of fines.

It is extremely important to monitor the compacting temperature as, if it exceeds 65°C, a greater loss of hydration water takes place, since at these temperatures the stable phase is monohydrate, so there are 6 molecules of water; this amount is excessive and means that the subsequent hardening phenomena (crystallization and hydration) take longer and the product requires a greater stabilization time.

The advantage represented by the thermal phenomenon over the addition of water to achieve the liquid phase is considerable, as a subsequent drying process, which makes the whole process more costly in economic terms, is no longer necessary.

The reducing agent produced by the process of the invention may be added at any stage of the cement manufacturing process, as the reducing effect takes place when the cement is mixed with water for its end use. It may therefore be added both in the mill when the clinker is mixed and ground with all the other raw materials, after the mill and ahead of the cement storage silos and/or after the silos when the cement is bagged.

This compacted reducing agent would be added as a further raw material in the production process, before or after grinding. The size of the particles (defined by the length and diameter of the cylinder) may be selected depending on the type of handling to which the product is going to be subjected. For instance, in the case of air conveying, the particle size would have to be made sufficiently small for it to be able to be conveyed by this system.

Generally speaking, a particle size would be defined similar to that of the clinker, which will be reduced to the end size of the product in the actual mill. The fact of adding the product in the mill facilitates better mixing between the reducing agent and the end product.

The invention, therefore, describes a process for making a cement additive characterised in that it consists of at least the following stages:
- Heating to 50-65°C of ferrous sulphate heptahydrate in the presence of an additive that supplies a hydratable salt and a second binding and bonding additive
- Lowering of the temperature to at least 30°C
- Pelletizing

A second aspect of the invention refers to the cement additive produced by the process described here.

### DESCRIPTION OF THE DRAWINGS

The present descriptive report is supplemented with a set of drawings, illustrating the preferred specimen embodiment and never restricting the scope of the invention.

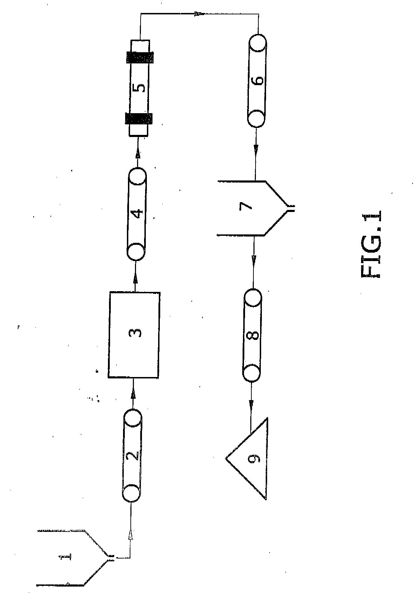

Figure 1 shows a flowchart of the process of the invention.

### PREFERRED EMBODIMENT OF THE INVENTION

In an example of embodiment the compacting plant needed to carry out the method of the invention should contain the equipment which is represented in figure 1 of the flowchart and which we specify below.
■ A feeder mixing hopper (1) with a capacity of 20 tonnes/hour, with two worms in the lower part with a rotation reverser, driven by independent 7 kW motors.
■ A feeder conveyor belt (2) from the mixer hopper (1) to the pelletizing machine (3).
■ A pelletizing machine (3) consisting of:
   ○ A batching worm with a maximum capacity of 10 tonnes/hr, with a 5 kW motor.
   ○ A blade mixer with a capacity of 10 tonnes/hr, with a 7 kW motor and a feed nozzle for live steam at a pressure of 8 bar.
   ○ A feeder worm with a capacity of 10 tonnes/hr, driven by a 5 kW motor.
   ○ A pelletizing body consisting of two fixed rollers over the 700 mm diameter rotary matrix, with 200 mm rollers, driven by a 75 kW motor at a rotation speed of 450 rpm.
■ An output belt (4) from the pelletizing machine (3), with a maximum capacity of 10 tonnes/hr.
■ A fixed bed cooler (5), with a transverse area of 4 m², cooled with an air stream by means of circulation forced by a 20,000 m³/hr turbine.
■ An end product output belt (6).
■ A centrifugal screen (7) formed by a perforated mesh with 2 mm holes.
■ A storage conveyor belt (8).
■ An end product store (9).

In a specimen embodiment ferrous sulphur heptahydrate is fed into the mixer hopper (1), with the composition described in Table 1. The source of the ferrous sulphate heptahydrate is the production of titanium dioxide from ilmenite.

**Table 1. Composition of ferrous sulphate heptahydrate**

| Component | % |
|---|---|
| Ferrous sulphate heptahydrate | 97 |
| Sulphuric acid | 1.5 |
| Magnesium sulphate | 1 |
| zinc sulphate | 0.5 |

The amount of ferrous sulphur heptahydrate added is 80% by weight; in this example of embodiment 8 tonnes of ferrous sulphate heptahydrate was added.

Then 1 tonne of metallic sulphate monohydrate was added, representing a proportion of 10 % by weight of the feed. The metal sulphate monohydrate which is used in the example embodiment is a by-product from the production of titanium dioxide.

Table 2 shows the composition of the metal sulphate monohydrate.

**Table 2. Metal sulphate monohydrate**

| Composition | Percentage by weight (%) |
|---|---|
| Iron sulphate (II) monohydrate | 57.5% |
| Sulphuric acid | 18% |
| Magnesium sulphate | 2.5% |
| Titanium sulphate | 4.5% |
| Silica | 5% |
| Free water | 9.25% |
| Other oxides | 3% |

500 kg of dolomite was also added.

Dolomite, magnesium calcium carbonate, reacts with the free sulphuric acid of the ferrous sulphur monohydrate, forming calcium and magnesium sulphates for their hydration.

The use of carbonate is advisable since, upon reacting in an acid medium, CO₂ is given off, giving rise to a product of greater porosity and therefore amenable to compaction.

The remaining 5% (500 kg) is a clay with 20% of lignite content, known as coal smut.

Once the mixer hopper (1) has been filled, the residence time to achieve a homogenous mix is approximately 10 minutes.

After 10 minutes the products are transferred from the mixer hopper (1) to the pelletizing machine (3) by way of the conveyor belt (2).

When the pelletizing machine (3) has been filled, the compaction stage starts. The pelletizing machine (3) is supplied by the reception hopper of said machine, the batching worm is connected to a PLC (programmable logic controller) which acts as an automatic system for controlling the maximum intensity that we wish to achieve in the machine.

After this batching, it passes to a blade mixer. This blade mixer has a steam supply nozzle for raising the temperature of the mix. Approximately 50 kg/hr of steam is sufficient to raise the temperature 10°C. The remaining temperature increase is achieved by friction on passing through the matrix. The steam and solids are therefore mixed in the blade mixer and any lumps that might be formed are broken down.

The feeder worm places the mix obtained in the blade mixer at the centre of the pelletizing machine (3) in order to assure uniform distribution over the whole matrix, therefore taking optimal advantage of the extrusion surface area.

The matrices used have the following dimensions: outside diameter, 700mm, inside diameter, 560 mm, overall width, 281mm, working track, 169mm, 4 mm diameter holes, compaction length 70 mm, overall channel length 120 mm.

The approximate output was 3 tonnes/hr with an average consumption of 120 amperes, which gives us a specific consumption of approximately 25 kW/hr per tonne of product.

The through temperature is 55°C.

After compaction the product heads via an output belt (4) to a fixed bed cooler (5). The cooler (5) is supplied with an air turbine of approximately 20,000 m³/hr at ambient temperature. With a residence time of about 15 minutes the temperature drops to 30°C, where it now recovers its hardness due to recrystallization and rehydration.

In this way, the end product has an approximate size of 4 mm in diameter with a length of between 16-25 mm. This product has a high quantity of iron II, 16 %, which is the active element and which appears stabilized with regard to oxidation due to the fact that the contact surface area with the air diminishes.

From the cooler (5) it passes via an end product output belt (6) to a centrifugal screen (7) formed of a perforated mesh with 2mm holes, and from here to a storage conveyor screen (8), which directs the product to the end product store (9).

The essential nature of this invention is not altered by variations in materials, shape, size and arrangement of the component elements, not described for restrictive purposes, this sufficing for an expert to be able to proceed to its reproduction.

## Claims

1. A method for obtaining a cement additive **characterised in that** it comprising at least the following stages:
Heating to 50-65°C of ferrous sulphate heptahydrate in the presence of an additive that supplies a salt amenable to hydration and a second binding and bonding additive.
Lowering of the temperature to at least 30°C.
Pelletizing.

2. The method for obtaining a cement additive according to claim 1 **characterised in that** at the heating stage the ferrous sulphate heptahydrate is at a composition of 50-95%, the additive that supplies a hydratable salt is between 5-35%, and the binding and bonding additive is in a proportion between 0-15%.

3. The method according to claim 1 **characterised in that** the additive that supplies a hydratable salt is magnesium sulphate.

4. The method according to claim 1 **characterised in that** the binding and bonding additive is double magnesium and calcium sulphate.

5. The method according to claim 4 **characterised in that** the double magnesium and calcium sulphate is produced by causing iron sulphate monohydrate with sulphuric acid content to react with dolomite.

6. The method according to claim 5 **characterised in that** the iron sulphate monohydrate is a by-product of the manufacture of titanium dioxide.

7. The method according to claim 1 **characterised in that** the binding and bonding additive is clay containing lignite or calcium sulphates.

8. The method according to claim 1 **characterised in that** ferrous sulphate heptahydrate is a by-product of the production of titanium dioxide from ilmenite.

9. A Cement additive **characterised in that** it is produced according to the method described in any of claims 1 to 7.
